# EUROPÄISCHE PATENTANMELDUNG

(11) **EP 3 220 509 A1**
(43) Veröffentlichungstag der Anmeldung: **20.09.2017**
(21) Anmeldenummer: 16160956.5
(22) Anmeldetag: 17.03.2016
(51) Int. Cl.: H02J 9/06, H05B 37/00, G09F 13/04

(54) **ELEKTRONISCHE SCHALTUNG FÜR EINE SICHERHEITSBELEUCHTUNG**

(71) Anmelder: polynom ag, 5314 Kleindöttingen (CH)
(72) Erfinder: Noé, Michel, 6314 Unterägeri (CH)
(74) Vertreter: Frei Patent Attorneys

(57) **Zusammenfassung**

**Elektronische Schaltung** (100) für eine Sicherheitsbeleuchtung mit Notstromversorgung und mit einem Piktogramm, wobei die elektronische Schaltung (100) eine elektronische Steuerungseinheit (1), eine LED-Einheit (3) mit Leuchtdioden (LEDs) (4) und einen Akkumulator (6) zur Speicherung von elektrischer Energie aufweist, wobei die elektronische Steuerungseinheit (1) in einem Notbetrieb die LEDs (4) mit Energie aus dem Akkumulator (6) versorgt, und wobei ein Akkumulator-Ladestrom und ein Akkumulator-Entladungsstrom durch die LED-Einheit (4) geführt ist.

## Beschreibung

Die Erfindung bezieht sich auf das Gebiet der Sicherheitsbeleuchtungen, insbesondere auf Sicherheitsbeleuchtungen mit einem Piktogramm.

Sicherheitsbeleuchtungen sind dazu eingerichtet, auch bei Ausfall einer Netzversorgung eine Beleuchtung, zum Beispiel die Beleuchtung einer Sicherheits-Anzeige bzw. einer Hinweis-Leuchte, sicherzustellen. Zu diesem Zwecke weisen Sicherheitsbeleuchtungen einen Energiespeicher auf, aus dem die Beleuchtung bei Ausfall der Netzversorgung gespeist werden kann.

Aus dem Stand der Technik sind Sicherheitsbeleuchtungen bekannt, mit elektronischen Schaltungen, welche
- eine elektronische Steuerungseinheit zur Steuerung der Sicherheitsbeleuchtung,
- eine LED-Einheit mit Leuchtdioden (LEDs), und
- einen Akkumulator zur Speicherung von elektrischer Energie
aufweisen, wobei der Akkumulator als Quelle einer Notstromversorgung dient. Die Steuerungseinheit wird - in einem Netzbetriebszustand - aus einem elektrischen Netz, typischerweise einem Wechselspannungsnetz mit 220 V oder 110 V, über einen Netzanschluss gespeist und speist ihrerseits die LED-Einheit und lädt den Akkumulator. Die Steuerungseinheit überwacht die Netzversorgung. Wenn die Netzversorgung ausfällt, wird dies von der Steuerungseinheit detektiert, worauf diese - in einem Notbetriebszustand - die Steuerungseinheit die LED-Einheit mit Energie aus dem Akkumulator speist. Typischerweise weist die Steuerungseinheit einen AC/DC-Wandler zur Speisung im Netzbetrieb, Messmittel zur Überwachung der Netzversorgung und optional einen DC/DC-Wandler zur Speisung im Notbetrieb auf.

Weiterhin weisen bekannte Sicherheitsbeleuchtungen eine transparente Platte mit einem Piktogramm auf. Das Piktogramm weist auf die Richtung eines Rettungsweges oder auf die Stelle eine Rettungsausganges hin und ist meistens in Weiss und Grün gehalten. Solche Sicherheitsbeleuchtungen werden auch Einzel-Batterie LED-Hinweisleuchten genannt.

Aus dem Stand der Technik sind bereits verschiedene Bauarten für Sicherheitsbeleuchtungen bekannt.

Bei einer ersten bekannten Bauart werden der Akkumulator und die elektronische Steuerung im hinteren Teil eines Gehäuses befestigt und mit einer inneren Platte geschützt. Auf dieser aus Metall oder Kunststoff gebauten Schutzplatte wird eine Leiterplatte mit LEDs oder werden mehrere solche Leiterplatten befestigt. Alternativ kann eine einzige Leiterplatte mit LEDs als Schutzplatte verwendet werden. Das Piktogramm wird auf einem durchsichtigen Deckel, welcher als "light diffusor" dient, geklebt, gedrückt oder befestigt. Somit erfolgt die Beleuchtung von der hinteren Seite des Piktogramms her.

Bei einer Variante dieser Bauart können die LEDs direkt auf einer Leiterplatte der elektronischen Steuerung angeordnet werden. Die innere Schutzplatte kann somit entfallen. Abhängig von der Art der Befestigung des Deckels muss eventuell der Netzspannungsbereich der elektronischen Steuerung vor einer allfälligen Berührung geschützt werden.

Als weitere Variante dieser Bauart kann das Piktogramm oder ein tragendes Teil, auf welches das Piktogramm befestigt wird, für die im hinteren Bereich bestehenden Einzelteile als Berührungsschutz dienen. Das Piktogramm bzw. die Platte, welche als "light guide" dient und das Licht auf das Piktogramm überträgt, wird in dieser Bauart seitlich beleuchtet. Die Beleuchtung erfolgt von einer, zwei oder von allen Seiten des Piktogramms her.

Bei einer zweiten bekannten Bauart wird das Piktogramm auf einer hängenden, durchsichtigen Scheibe aufgetragen. Durch diese Scheibe wird das Licht auf das Piktogramm verteilt. Herkömmlicherweise werden solche Scheiben aus PMMA oder PC gefertigt und das Piktogramm auf die Scheibe geklebt, gedruckt oder mechanisch befestigt. Die elektronische Steuerung, der Akku und die mit LEDs bestückte(n) Leiterplatte(n) befinden sich in einem Gehäuse, welches über der hängenden Scheibe liegt. Die Scheibe wird auf dem Gehäuse oder in dafür vorgesehenen Schlitzen befestigt. Das Gehäuse selbst wird auf die Wand oder gegen die Decke montiert. Die Beleuchtung des Piktogramms erfolgt durch das Gehäuse über dessen Schlitze oder über dafür vorgesehenen Löcher.

Bei einer Variante dieser Bauart können die LEDs direkt auf der elektronischen Steuerung bestückt werden. In diesem Fall kann eine Leiterplatte der elektronischen Steuerung so lang wie das Piktogramm sein. Herkömmlicherweise dient die Leiterplatte, auf welcher die elektronische Steuerung und die LEDs angeordnet sind, als Träger für den Akku.

Bei einer weiteren Variante dieser Bauart wird die LED-Einheit (bzw. werden die LED- Einheiten) seitlich auf der Scheibe oder in einem Rahmen, welcher die Scheibe trägt oder beinhaltet, befestigt. Das Gehäuse wird in der Decke eingebaut und ist somit nicht mehr sichtbar. Die Scheibe mit dem Piktogramm und die LED-Einheit (bzw. die LED-Einheiten) hängen unter dem Gehäuse. Der LED-Strom fliesst in Stromkabeln, welche auf den für das Aufhängen der Scheibe erforderlichen Seilen befestigt werden. Alternativ können diese Seile als Stromleitungen dienen.

Bei einer weiteren Variante dieser Bauart wird das Gehäuse nicht auf der Decke montiert sondern in der Decke eingebaut. Die Scheibe hängt somit direkt unter der Decke.

Bei den bekannten Bauarten sind die elektronische Steuerungseinheit und der Akkumulator zusammen in einem Gehäuse untergebracht, wodurch das Gehäuse eine gewisse Grösse aufweisen muss. Bei einigen der bekannten Bauarten wird das Gehäuse in die Decke oder in die Wand eingebaut. Diese Montage ist aber sehr aufwändig und somit teuer.

Es ist Aufgabe der Erfindung eine alternative elektronische Schaltung für eine Sicherheitsbeleuchtung, eine Kombination einer solchen Schaltung mit einer Leuchtplatte und eine Sicherheitsbeleuchtung mit einer solchen Kombination, insbesondere mit verbesserten Eigenschaften, zur Verfügung zu stellen.

Diese Aufgabe wird gelöst durch eine elektronische Schaltung für eine Sicherheitsbeleuchtung, eine Kombination einer solchen Schaltung mit einer Leuchtplatte und eine Sicherheitsbeleuchtung mit einer solchen Kombination gemäss den Patentansprüchen.

Eine erste Ausführungsform betrifft eine **elektronische Schaltung**
für eine Sicherheitsbeleuchtung mit Notstromversorgung und mit einem Piktogramm, wobei die elektronische Schaltung
- mindestens eine elektronische Steuerungseinheit,
- mindestens eine LED-Einheit mit Leuchtdioden (LEDs), und
- mindestens einen Akkumulator zur Speicherung von elektrischer Energie,
aufweist,
- wobei die elektronische Steuerungseinheit zur Steuerung einer Sicherheitsbeleuchtung eingerichtet ist,
- wobei die elektronische Steuerungseinheit zur Speisung durch einen Netzanschluss eingerichtet ist,
- wobei die elektronische Steuerungseinheit dazu eingerichtet ist in einem Notbetrieb die LEDs mit Energie aus dem Akkumulator zu versorgen, und
- wobei die elektronische Schaltung dazu eingerichtet ist, sowohl einen Akkumulator-Ladestrom als auch einen Akkumulator-Entladungsstrom durch die LED-Einheit zu führen.

Die **LED-Einheit** weist **Leuchtdioden,** auch "light-enlitting diodes" oder kurz "LEDs" genannt, auf. Die LEDs können durch Leiterbahnen gespeist sein. Die LED-Einheit kann eine Leiterplatte mit angelöteten LEDs aufweisen. Zum Beispiel kann die LED-Einheit als Leiterplatte mit angelöteten LEDs ausgebildet sein. Die elektrische Schaltung kann ein, zwei oder mehr als zwei LED-Einheiten aufweisen

Der **Akkumulator** ist zur wiederholbaren Ladung und Entladung vorgesehen. Die Kapazität des Akkumulators kann von einer benötigten Lichtleistung und/oder einer erforderlichen Notbetriebsdauer abhängig sein, welche zum Beispiel durch Normen festgelegt sein kann. Die elektrische Schaltung kann ein, zwei oder mehr als zwei Akkumulatoren aufweisen.

Die Führung des Akkumulator-Ladestrom als auch des Akkumulator-Entladungsstroms durch die LED-Einheit ermöglicht es, den Akkumulator in einer Distanz von der elektronische Steuerungseinheit zu montieren und dabei gleichwohl eine sicher und einfach herzustellende Verbindung zwischen Steuerungseinheit und Akkumulator zu realisieren. Dadurch ist es möglich, die Komponenten in verschiedenen Seiten eines Rahmens, insbesondere eines an allen Seiten dünnen Rahmens, unterzubringen.

Die Erfindung erlaubt also die Konstruktion einer Sicherheitsbeleuchtung mit einem als Rahmen ausgebildeten, relativ dünnen Gehäuse. Dadurch kann sie ohne klobiges Gehäuse realisiert werden, und ferner kleinem Aufwand und geringen Kosten gefertigt, montiert und/oder gewartet werden.

In weiteren Ausführungsformen verbinden Leitungen zur Führung des Akkumulator-Ladestroms und des Akkumulator-Entladungsstroms den Akkumulator mit der elektronischen Steuerungseinheit elektrisch und verlaufen, zumindest teilweise, über die LED-Einheit. "Über die LED-Einheit" kann in diesem Zusammenhang insbesondere "durch die LED-Einheit" (zum Beispiel als Leitungen in oder auf einer Leiterplatte der LED-Einheit) und/oder "an der LED-Einheit" (zum Beispiel, zumindest teilweise, als Leitung an einer Oberfläche eines Gehäuses der LED-Einheit) bedeuten.

Insbesondere können die Leitungen grösstenteils über die LED-Einheit verlaufen. "Grösstenteils" kann in diesem Zusammenhang heissen, dass mehr als 50% des Gesamtleitungsweges zur Führung des Akkumulatorstroms zwischen Akkumulator und Steuerungseinheit über die LED-Einheit verlaufen.

In weiteren Ausführungsformen sind die Leitungen zur Führung des Akkumulator-Ladestroms und des Akkumulator-Entladungsstroms, zumindest teilweise, als Leiterbahnen einer Leiterplatte realisiert. Leiterbahnen auf der Leiterplatte sind bei der Produktion, Montage, Betrieb und Wartung weniger störanfällig als zum Beispiel lose, separate Kabel. Dies ist für eine Sicherheitsbeleuchtung von besonderer Bedeutung.

In weiteren Ausführungsformen weist die LED-Einheit einen ersten Anschluss und einen zweiten Anschluss auf,
- wobei der erste Anschluss mindestens vierpolig ist,
- wobei der zweite Anschluss mindestens zweipolig ist, und
- wobei der erste Anschluss und der zweite Anschluss räumlich voneinander getrennt sind.

Die elektronische Steuerungseinheit kann an den ersten Anschluss der LED-Einheit und der Akkumulator an den zweiten Anschluss der LED-Einheit angeschlossen sein. Der Ladestrom und der Entladestrom des Akkumulators können über den zweiten Anschluss geführt sein, insbesondere durch ein erstes Pol-Paar des ersten Anschlusses. Ein zweites Pol-Paar des ersten Anschlusses kann dazu eingerichtet sein, die LED-Einheit zu speisen, zum Beispiel im Notbetrieb wie auch im Netzbetrieb.

Insbesondere der erste Anschluss an einem ersten Ende der LED-Einheit angebracht sein und der zweite Anschluss an einem, dem ersten Ende gegenüber gelegenen, zweiten Ende der LED-Einheit. In diesem Zusammenhang bezeichnet das Wort "Ende" eine, im geometrischen Sinne, peripher gelegene Region einer LED-Einheit.

In Ausführungsformen ist der erste Anschluss als Steckverbindung mit einem Randstecker respektive Platinenstecker ausgebildet.

In Ausführungsformen ist der zweite Anschluss als Steckverbindung mit einem Randstecker respektive Platinenstecker ausgebildet.

Jedes räumlich ausgeprägte Bauteil kann einen von einem Quader umschrieben werden. Der kleinste ein Bauteil umschreibende, Quader hat eine erste Kantenlänge, eine zweite Kantenlänge und eine dritte Kantenlänge. Die Länge der längsten dieser drei Kantenlängen soll **"Grösse" bzw. "Länge" der "längsten Kante" eines Bauteils** genannt werden.

Ein Bauteil soll **"länglich"** genannt werden, wenn die erste Kantenlänge substantiell grösser als die zweite Kantenlänge und die dritte Kantenlänge ist. Das heisst,
- wenn die erste Kantenlänge mindestens doppelt oder dreimal oder fünfmal oder achtmal oder zehnmal so lang ist wie die zweite Kantenlänge ist, und
- wenn die erste Kantenlänge mindestens doppelt oder dreimal oder fünfmal oder achtmal oder zehnmal so lang ist wie die dritte Kantenlänge ist.

Ein Bauteil soll **"flächig"** genannt werden, wenn die erste Kantenlänge *und* die zweite Kantenlänge substantiell grösser als die dritte Kantenlänge sind. "Länglich" ist also ein Spezialfall von "flächig".

Längliche Bauteile können geometrisch in Analogie zu Strecken (also Teile von Geraden) beschrieben werden, wobei die längste Kante durch eine Strecke abstrahiert werden kann. Flächige Bauteile können geometrisch in Analogie zu Flächen (also Teile von Ebenen) beschrieben werden, wobei die durch die beiden längeren Kanten aufgespannte Ebene als "Ebene des Bauteils" betrachtet werden kann. Insbesondere können zwei Bauteile, die länglich oder flächig ausgebildet, sind in diesem Sinne zueinander senkrecht oder zueinander parallel sein.

In weiteren Ausführungsformen ist die räumliche Distanz zwischen dem ersten Anschluss und dem zweiten Anschluss mindestens halb so gross, insbesondere im Wesentlichen so gross, wie die längste Kante eines kleinsten die LED-Einheit umschreibenden Quaders.

In weiteren Ausführungsformen hat ein kleinster, die LED-Einheit umschreibende, Quader eine erste Kantenlänge, eine zweite Kantenlänge und eine dritte Kantenlänge,
- wobei die erste Kantenlänge mindestens fünfmal so lang ist wie die zweite Kantenlänge und
- wobei die erste Kantenlänge mindestens fünfmal so lang ist wie die dritte Kantenlänge.

In weiteren Ausführungsformen ist der Abstand zwischen der elektronischen Schaltung und dem Akkumulator mindestens halb so gross, insbesondere im Wesentlichen so gross, wie die längste Kante eines kleinsten die LED-Einheit umschreibenden Quaders.

Zum Beispiel können die elektronische Schaltung, die LED-Einheit und der Akkumulator länglich oder flächig ausgebildet sein,
- wobei die elektronische Steuerungseinheit senkrecht zu der LED-Einheit und an einem Ende der LED-Einheit angeordnet ist, und
- wobei der Akkumulator senkrecht zu der LED-Einheit an einem anderen Ende der LED-Einheit angeordnet ist,
wobei der Abstand beiden Enden im Wesentlichen so gross ist wie die längste Kante der LED-Einheit. In diesem Beispiel sind die elektronische Steuerungseinheit und der Akkumulator zueinander parallel und der Abstand zwischen diesen beiden Komponenten ist im Wesentlichen so gross wie die längste Kante der LED-Einheit.

In weiteren Ausführungsformen sind die LEDs auf der LED-Einheit in einer oder mehrerer Reihen angeordnet. Zwei oder mehr LEDs sind in einer Reihe angeordnet, falls die LEDs im Wesentlichen auf einer Geraden angeordnet sind.

In weiteren Ausführungsformen sind die LEDs auf der LED-Einheit in einer Matrix angeordnet. Das heisst, dass die LEDs in einer Struktur aus Zeilen und Spalten angeordnet sind, wobei alle Zeilen jeweils gleichviele LEDs und alle Spalten jeweils gleichviele LEDs aufweisen. Ein Beispiel für eine Anordnung in einer 17 x 1 oder einer 1 x 17 Matrix ist die Anordnung von 17 LEDs in einer Reihe.

In weiteren Ausführungsformen sind die LEDs auf der LED-Einheit im Wesentlichen matrixförmig angeordnet, wobei jedoch die Anzahl von LEDs in aufeinanderfolgenden Reihen bzw. Spalten gleich bleiben, um eine LED grösser oder um eine LED kleiner seien kann. Insbesondere können die LEDs auf der LED-Einheit im Wesentlichen rautenförmig angeordnet sein. In weiteren Ausführungsformen können aufeinanderfolgende Zeilen bzw. Spalten jeweils in Richtung der Zeile bzw. Spalte gegeneinander versetzt sein, beispielsweise um einen halben Abstand der LEDs in den Zeilen bzw. Spalten.

Die LED-Einheit kann in erster Näherung als flächiger Quader ausgebildet sein. Die beiden Seiten mit der grössten Fläche werden auch **"Flachseiten"** genannt. Die im Wesentlichen vier anderen Seiten werden als **"Kurz-Seiten"** bezeichnet.

In weiteren Ausführungsformen sind LEDs auf zwei Seiten, insbesondere auf zwei sich einander gegenüberliegenden Flachseiten, der LED-Einheit angeordnet. Zum Beispiel kann die LED-Einheit als Leiterplatte mit auf beiden Flachseiten angelöteten LEDs ausgebildet sein. Eine Anordnung von LEDs auf zwei Seiten der LED-Einheit kann für eine zweiseitige Beleuchtung genutzt werden.

Weitere Ausführungsformen betreffen eine **Kombination aus einer elektronischen Schaltung und einer Leuchtplatte mit einem Piktogramm,** wobei die Leuchtplatte zumindest teilweise transparent ist.

Die Leuchtplatte kann licht-führendes Material und/oder licht-streuendes Material aufweisen. Insbesondere kann die Leuchtplatte - zumindest teilweise - als eine lichtführende Platte (auch "light guide plate" oder kurz "LGP" genannt) und/oder als eine Licht-Diffusor-Platte (auch "licht diffusor plate" oder kurz "LED" oder "LDP" genannt) ausgebildet sein.

Die Leuchtplatte kann zwei oder mehr (Unter-)Platten aufweisen. Zum Beispiel kann die Leuchtplatte eine Licht-Diffusor-(Unter-)Platte und eine lichtführende (Unter-)Platte aufweisen. Es kann sein, dass einer der beiden (Unter-)Platten in zumindest einer Dimension grösser als die andere (Unter-)Platte ist. Beispielsweise kann die Kombination so eingerichtet sein, dass LEDs primär in eine lichtführende (Unter-)Platte einstrahlen, an welche eine Licht-Diffusor-(Unter-)Platte anliegt.

Die Licht-Diffusor-(Unter-)Platte kann auf einer Flachseite das Piktogramm aufweisen. In die lichtführende (Unter-)Platte eingeführtes Licht kann in die Licht-Diffusor-(Unter-)Platte und von dort aus durch das Piktogramm hindurch abgestrahlt werden.

Das Piktogramm ist typischerweise als Sicherheitskennzeichen ausgebildet und zum Beispiel in Weiss und Grün gehalten. Das Piktogramm stellt zum Beispiel einen stilisierten Menschen, einen Pfeil und/oder eine stilisierte Tür/Treppe/etc. dar.

Eine Leuchtplatte kann in erster Näherung ein Quader sein. Insbesondere kann die Leuchtplatte im Wesentlichen sechs Seiten bzw. Seitenflächen aufweisen.

Eine Leuchtplatte kann in erster Näherung ein flacher Quader sein. Insbesondere kann die Leuchtplatte in einer ersten Dimension wesentlich kürzer (dünner) als in zwei dazu senkrecht angeordneten Dimensionen. "Wesentlich kürzer" kann in diesem Zusammenhang weniger als 1/4 oder 1/8 oder 1/16 oder 1/32 so lang bedeuten. Die beiden Seiten mit der grössten Fläche sollen **"Flachseiten"** der Leuchtplatte genannt werden. Die im Wesentlichen vier anderen Seiten sollen als **"Kurz-Seiten"** der Leuchtplatte bezeichnet werden.

Eine Leuchtplatte kann eine von einem flachen Quader leicht abweichende Form haben. Beispielsweise kann die Leuchtplatte aus zwei, an Flachseiten aneinander liegenden, (Unter-)Platten bestehen, von denen eine (Unter-)Platten in zumindest einer Dimension kleiner als die andere (Unter-)Platten ist.

In weiteren Ausführungsformen ist die LED-Einheit an einer Kurz-Seite der Leuchtplatte angeordnet. So kann die LED-Einheit zum Beispiel flächig ausgebildet und parallel zu einer Kurz-Seite der Leuchtplatte angeordnet sein. Die LEDs strahlen - von dem Piktogramm aus gesehen - seitlich in die Leuchtplatte hinein. Das in die Leuchtplatte eingestrahlte Licht verteilt sich in der Leuchtplatte und strahlt zumindest teilweise durch das auf mindestens einer Flachseite der Leuchtplatte angebrachte Piktogramm hindurch ab. Diese Bauart soll als **"Seiten-Strahler"** bezeichnet werden. Für einen zweiseitigen Seiten-Strahler kann die Leuchtplatte an beiden Flachseiten ein Piktogramm aufweisen oder eine zweite Leuchtplatte mit einem Piktogramm vorgesehen sein.

In weiteren Ausführungsformen ist die LED-Einheit an einer Flachseite der Leuchtplatte angeordnet. So kann die LED-Einheit zum Beispiel flächig ausgebildet und an einer ihrer Flachseite parallel zu einer Flachseite Seite der Leuchtplatte angeordnet sein Die LEDs strahlen durch die Leuchtplatte hindurch. Diese Bauart soll als **"Hinter-Strahler"** bezeichnet werden. Bei einem Hinter-Strahler ist das Piktogramm zumeist auf der, der LED-Einheit abgewandten, Flachseite der Leuchtplatte angeordnet, so dass die LEDs - vom Piktogramm aus gesehen - von hinten durch die Leuchtplatte strahlen. Für einen zweiseitigen Hinter-Strahler kann eine zweite Leuchtplatte mit einem Piktogramm vorgesehen sein.

In weiteren Ausführungsformen weist die Kombination ferner einen Licht-Reflektor auf. Der Licht-Reflektor kann die Effektivität der Nutzung des von den LEDs emittierten Lichtes erhöhen. Der Licht-Reflektor kann ein von der Leuchtplatte separates Bauteil sein.

Ein Bauteil ist an einer Seite einer Leuchtplatte angeordnet, wenn das Bauteil der zu der Seite benachbart angeordnet ist. Zum Beispiel kann das Bauteil
- an der Seite und/oder an einem, an diese Seite anschliessenden, Teil der Leuchtplatte
- anliegen und/oder davon beabstandet sein.

In weiteren Ausführungsformen ist
- die elektronische Steuerungseinheit an einer ersten Seite der Leuchtplatte angeordnet,
- die LED-Einheit an einer zweiten Seite der Leuchtplatte, welche an die erste Seite anschliesst, angeordnet, und
- der Akkumulator an einer dritten Seite der Leuchtplatte, welche der ersten Seite gegenüber liegt, angeordnet.

Eine solche Ausführungsform kann als Seiten-Strahler ausgebildet sein, wobei die zweite Seite als Kurz-Seite der Leuchtplatte ausgebildet ist.

Eine solche Ausführungsform kann als Hinter-Strahler ausgebildet sein, wobei die zweite Seite als Flachseite der Leuchtplatte ausgebildet ist.

Die erste Seite (elektronische Steuerungseinheit) und die dritte Seite (Akkumulator) können üblicherweise als Kurz-Seiten ausgebildet sein.

Insbesondere kann es sein, dass die erste Seite im Wesentlichen senkrecht an die zweite Seite anschliesst und/oder dass die zweite Seite im Wesentlichen senkrecht an die dritte Seite anschliesst.

Die Kombination kann dazu eingerichtet sein, an der ersten Seite (elektronische Steuerungseinheit) an einer Wand oder Decke angebracht zu werden.

In weiteren Ausführungsformen ist die zweite Seite eine Flachseite der Leuchtplatte.

In weiteren Ausführungsformen ist die zweite Seite eine Kurz-Seite der Leuchtplatte.

In weiteren Ausführungsformen kann es sein, dass
- die Kombination eine weitere Leuchtplatte mit einem Piktogramm aufweist, und
- die weitere Leuchtplatte zumindest teilweise transparent ist.

Insbesondere können die Leuchtplatte und die weitere Leuchtplatte entlang ihrer Flachseiten zueinander parallel angeordnet sein. Solche Ausführungsformen können zum Beispiel als zweiseitiger Hinter-Strahler oder als zweiseitiger Seiten-Strahler ausgebildet sein.

Die Leuchtplatte und die weitere Leuchtplatte können an sich gegenüberliegenden Flachseiten einer flächig ausgebildeten LED-Einheit angeordnet sein. Solche Ausführungsformen können zum Beispiel als zwei-seitiger Hinter-Strahler ausgebildet sein. Dabei kann es sein, dass
- LEDs auf beiden Flachseiten der flächig ausgebildeten LED-Einheit angeordnet sind;
- die Leuchtplatte mit einer, einem Piktogramm abgewandten, Flachseite an einer ersten Flachseite der LED-Einheit angeordnet ist, und
- die weitere Leuchtplatte mit einer, einem Piktogramm abgewandten, Flachseite an einer zweiten Flachseite der LED-Einheit angeordnet ist.

In weiteren Ausführungsformen sind die Leuchtplatte und die weitere Leuchtplatte zueinander parallel angeordnet und die LED-Einheit ist seitlich, sowohl an einer Kurz-Seite der Leuchtplatte als auch an einer Kurz-Seite der weiteren Leuchtplatte, angeordnet. Die LED-Einheit kann mindestens zwei Reihen paralleler LEDs aufweisen, welche so angeordnet sind, dass eine erste Reihe von LEDs in die Leuchtplatte und eine zweite Reihe von LEDs in die weitere Leuchtplatte einstrahlen. Die Leuchtplatte und/oder die weitere Leuchtplatte können eine lichtführenden (Unter-)Platte und einer Licht-Diffusor-(Unter-)Platte aufweisen. Insbesondere können die LEDs so angeordnet sein, dass sie primär in die bzw. die jeweilige lichtführende (Unter-)Platte einstrahlen. Solche Ausführungsformen können als zwei-seitiger Seiten-Strahler ausgebildet sein.

In weiteren Ausführungsformen ist ein Licht-Reflektor an einer Seite der Leuchtplatte angeordnet, welche einer Seite der Leuchtplatte gegenüberliegt an welcher die LED-Einheit angeordnet ist.

In weiteren Ausführungsformen ist die Kombination dazu eingerichtet, dass die LEDs an einer Seite in die Leuchtplatte einstrahlen. Unter Umständen wird jedoch nicht das gesamte Licht an einer, ein Piktogramm aufweisende, Flachseite der Leuchtplatte ausgestrahlt, sondern auch an anderen Seiten der Leuchtplatte. An jenen anderen Seiten angebrachte, in die Leuchtplatte gerichtete, Licht-Reflektoren, können dieses Licht wieder in die Leuchtplatte hineinreflektieren, wo es gegebenenfalls - wie gewünscht - an einer Flachseite mit Piktogramm abgestrahlt wird. Licht-Reflektoren können den Effizienzgrad einer Sicherheitsbeleuchtung erhöhen und so helfen den Stromverbrauch zu senken. Licht-Reflektoren können an einer der LED-Einheit gegenüberliegende Seite und/oder an jeder anderen Seite der Leuchtplatte angeordnet sein.

In weiteren Ausführungsformen kann es sein, dass
- die elektronische Steuerungseinheit länglich ausgebildet ist und parallel zu der ersten Seite der Leuchtplatte angeordnet ist, und/oder
- die LED-Einheit länglich ausgebildet ist und parallel zu der zweiten Seite der Leuchtplatte angeordnet ist, und/oder
- der Akkumulator länglich ausgebildet ist und parallel zu der dritten Seite der Leuchtplatte angeordnet ist, und/oder
- die Kombination optional einen Licht-Reflektor aufweist, der länglich ausgebildet ist und parallel zu einer der drei Seiten oder zu einer anderen, vierten, Seite der Leuchtplatte angeordnet ist.

Eine **Sicherheitsbeleuchtung** mit Notstromversorgung und mit einem Piktogramm weist eine oben beschriebene Kombination aus einer elektronischen Schaltung und einer Leuchtplatte mit einem Piktogramm auf. Die Sicherheitsbeleuchtung kann einen Rahmen aufweisen,
- wobei die Leuchtplatte in dem Rahmen eingefasst ist, und
- wobei die elektronische Steuerungseinheit, die LED-Einheit und der Akkumulator in dem Rahmen angeordnet sind.

Ein solcher Rahmen ist ein Beispiel für ein Gehäuse, welches die Komponenten der elektronischen Schaltung abdecken und schützen kann.

Indem die elektronische Schaltung dazu eingerichtet ist, sowohl den Akkumulator-Ladestrom als auch den Akkumulator-Entladungsstrom durch die LED-Einheit zu führen, ist es möglich, die Komponenten der elektronischen Schaltung in verschiedenen Teilen eines relativ dünnen Rahmens unterzubringen.

Der Rahmen kann mindestens drei, zueinander im Wesentlichen senkrechte, Abschnitte aufweisen und es können
- die elektronische Steuerungseinheit,
- die LED-Einheit und
- der Akkumulator
in jeweils verschiedenen Abschnitten des Rahmens angeordnet sein.

Für eine als Seiten-Strahler ausgebildete Sicherheitsbeleuchtung zur Anbringung an eine Decke kann
- die elektronische Steuerungseinheit
   ∘ länglich sein und
   ∘ parallel zu einer ersten Kurz-Seite der Leuchtplatte in einem ersten Abschnitt eines Rahmens angeordnet sein,
   ∘ wobei der Rahmen dazu eingerichtet ist, an diesem ersten Abschnitt an die Decke angebracht zu werden.
   Von der Perspektive des Piktogramms (bzw. der Piktogramme) aus ist diese Seiten bzw. dieser Abschnitt nach Montage an der Wand, also im Betriebszustand, oben gelegen.
- Die LED-Einheit kann
   ∘ länglich sein und
   ∘ parallel zu einer zweiten Kurz-Seite der Leuchtplatte in einem zweiten Abschnitt des Rahmens angeordnet sein,
      ▪ welcher an den ersten Abschnitt, zum Beispiel im Wesentlichen senkrecht, anschliesst.
   Von der Perspektive des Piktogramms (bzw. der Piktogramme) ist diese Seite bzw. dieser Teil "seitlich" gelegen.
- Der Akkumulator kann
   ∘ länglich sein und
   ∘ parallel zu einer der dritten Kurz-Seite der Leuchtplatte in einem dritten Abschnitt des Rahmens angeordnet sein,
      ▪ welche zum Beispiel dem ersten Abschnitt im Wesentlichen parallel gegenüber liegt.
   Von der Perspektive des Piktogramms (bzw. der Piktogramme) ist diese Seite bzw. dieser Abschnitt "unten" gelegen.

Jede der drei Komponenten in diesem Beispiel ist länglich ausgebildet und liegt parallel an eine jeweils andere Seite der Leuchtplatte angeordnet. Wenn die Komponenten "dünn" ausgebildet sind, kann an diesen drei Seiten jeweils nur ein dünnes, als Rahmen ausgebildetes, Gehäuse nötig sein um die Komponenten abzudecken und zu schützen.

Eine als Seiten-Strahler ausgebildete Sicherheitsbeleuchtung zur Anbringung an einer Wand kann analog zu dem vorstehenden Beispiel ausgebildet sein, als eine um 90° gedrehte Anordnung. Die elektronische Steuerungseinheit liegt dann nach Montage an einer Wand, also im Betriebszustand, seitlich von dem Piktogramm (bzw. den Piktogrammen); die LED-Einheit oberhalb oder unterhalb des Piktogramms (bzw. der Piktogramme) und der Akkumulator ebenfalls seitlich von dem Piktogramm (bzw. der Piktogramme), an einer Seite, welche der Seite mit der elektronischen Steuerungseinheit gegenüberliegt.

Eine als Hinter-Strahler ausgebildete Sicherheitsbeleuchtung zur Anbringung an eine Decke bzw. eine Wand kann ähnlich zu den beiden vorstehenden Beispielen ausgebildet sein, wobei aber zum Beispiel die LED-Einheit statt an einer Kurz-Seite an einer Flachseite der Leuchtplatte (bzw. zwischen einer Flachseite der Leuchtplatte und einer Flach-Seite einer weiteren Leuchtplatte) angeordnet ist.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: Elemente einer elektronischen Schaltung für eine Sicherheitsbeleuchtung,
- Figur 2: eine Leitungsführung in dieser Schaltung,
- Figur 3: eine Kombination aus einer Schaltung und einer Leuchtplatte für einen Seiten-Strahler,
- Figur 4: eine Kombination aus einer Schaltung und einer Leuchtplatte für einen Seiten-Strahler mit zwei Leuchtplatten im Querschnitt,
- Figur 5: eine Kombination aus einer Schaltung und einer Leuchtplatte für einen Hinter-Strahler,
- Figur 6: eine Kombination aus einer Schaltung und einer Leuchtplatte für einen Hinter Strahler mit zwei Leuchtplatten im Querschnitt,
- Figur 7: eine Kombination aus einer Schaltung und einer Leuchtplatte mit einem Licht-Reflektor, und
- Figur 8: eine Sicherheitsbeleuchtung mit Rahmen und mit einem Piktogramm.

Gleiche oder gleich wirkende Elemente sind jeweils mit denselben Bezugszeichen bezeichnet.

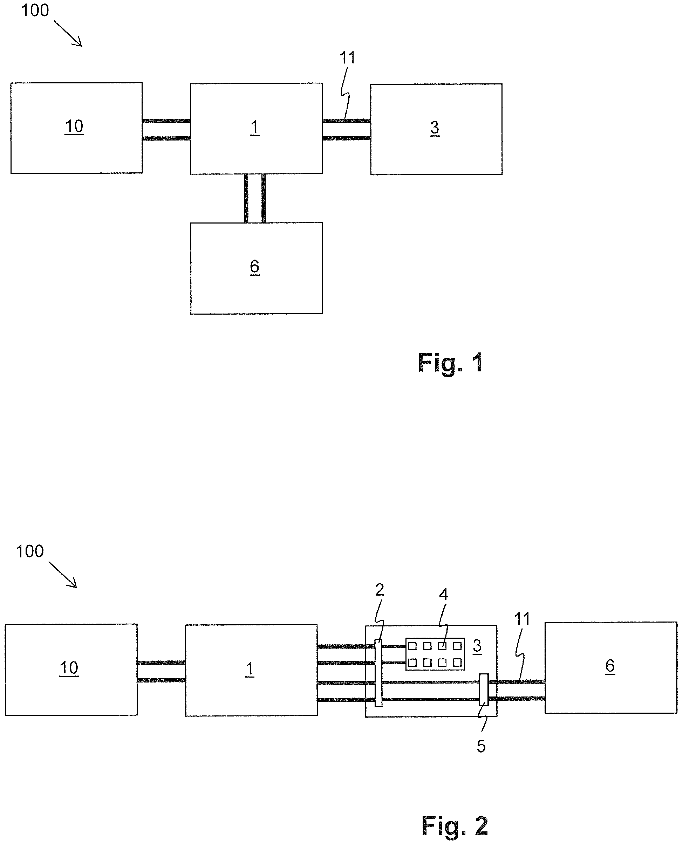

Figur 1 zeigt schematisch Elemente einer elektronischen Schaltung 100 für eine Sicherheitsbeleuchtung 101, aufweisend
- eine elektronische Steuerungseinheit 1 zur Steuerung der Sicherheitsbeleuchtung 101,
- eine LED-Einheit 3, und
- einen Akkumulator 6 zur Speicherung von elektrischer Energie.
Die LED-Einheit 3 und der Akkumulator 6 sind mit der elektronischen Steuerungseinheit 1 verbunden. Die elektronische Steuerungseinheit 1 ist mit einem

Netzanschluss 10 verbunden und kann über diesen aus einem Netz gespeist werden. Die elektrischen Verbindungen zwischen den verschiedenen Komponenten der elektronischen Steuerungseinheit kann Kabel, Löt-Augen, Pads, Klemmen und/oder Stecker aufweisen.

**Figur 2** zeigt eine Leitungsführung in der elektronischen Schaltung 100. Elektrische Verbindungen oder Leitungen 11 sind durch dicke Linien dargestellt. Es sind Anschlüsse des Akkumulators 6 und damit ein Akkumulator-Ladestrom und ein Akkumulator-Entladungsstrom durch die LED-Einheit 3 geführt. Dadurch ist es möglich eine Sicherheitsbeleuchtung 101 zu konstruieren bei der die Komponenten der elektronischen Schaltung 100 in verschiedenen Abschnitten, und auch an verschiedenen Seiten, eines dünnen Rahmens 30 unterzubringen.

In dem gezeigten Beispiel verlaufen also Leitungen zur Führung des Akkumulator-Ladestroms und des Akkumulator-Entladungsstroms zumindest abschnittsweise über die LED-Einheit 3. Die LED-Einheit 3 weist zwei Anschlüsse 2, 5 auf. Über einen ersten Anschluss 2 ist die LED-Einheit 3 mit der elektronische Steuerungseinheit 1 verbunden. Dieser Anschluss 2 weist mindestens zwei Pol-Paare (also mindestens vier Pole) auf. Ein erstes Pol-Paar des ersten Anschlusses 2 ist zur Führung des Ladestroms und des Entladestroms des Akkumulators eingerichtet. Ein zweites Pol-Paar speist LEDs 4 der LED-Einheit 3.

Über einen zweiten Anschluss 5 werden die von dem Akkumulator 6 kommenden Leitungen 11 zur Führung des Akkumulator-Ladestroms und des Akkumulator-Entladungsstrom an die LED-Einheit 3 angeschlossen; dieser Anschluss weist mindestens zwei Pole auf.

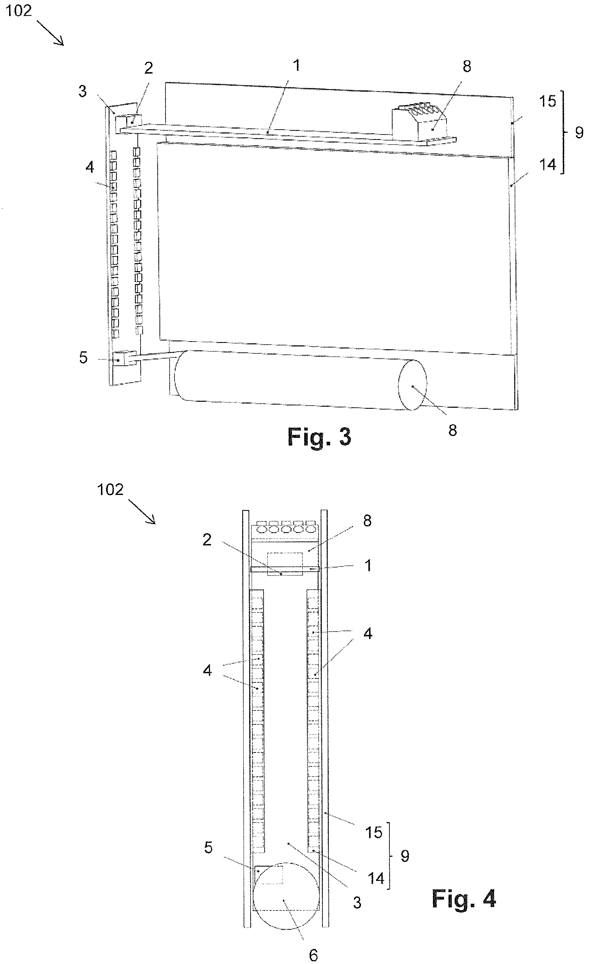

**Figur 3** zeigt eine Kombination 102 aus einer elektronischen Schaltung 100 und einer Leuchtplatte 9, wobei an der LED-Einheit 3 angebrachte LEDs 4 - von der Leuchtplatte 9 aus gesehen - seitlich in die Leuchtplatte 9 einstrahlen. Eine solche Ausführungsform wird "Seiten-Strahler" genannt.

Die elektronische Steuerungseinheit 1 ist als Leiterplatte mit aufgelöteten Bauteilen ausgebildet. Über einen Anschluss 8 kann die elektronische Steuerungseinheit 1 mit einem Netzanschluss 10 an einem Gehäuse verbunden werden, oder der Anschluss 8 selber dient als Netzanschluss. Die elektronische Steuerungseinheit 1 ist über den ersten Anschluss 2 mit der LED-Einheit 3 verbunden. Der erste Anschluss 2 kann als Stecker resp. Buchse ausgebildet sein, in welchen die Leiterplatte der Steuerungseinheit 1 mit einer korrespondierenden Buchse resp. Stecker eingesteckt ist. Alternativ kann, wie in der Figur schematisch gezeigt, die Leiterplatte mit einem Randstecker ("edge connector") oder Platinenstecker in eine korrespondierende Buchse an der LED-Einheit eingesteckt sein. Umgekehrt kann die LED-Einheit mit einem Platinenstecker in eine Buchse an der Steuerungseinheit eingesteckt sein.

Die LED-Einheit 3 ist ebenfalls als Leiterplatte mit beispielsweise aufgelöteten Bauteilen ausgebildet. Insbesondere sind auf einer Flachseite (also der Seite mit der grössten Fläche) der Leiterplatte die LEDs 4 in zwei zueinander parallelen Reihen angeordnet. Über den zweiten Anschluss 5 ist der Akkumulator 6 mit der LED-Einheit 3 verbunden. Der zweite Anschluss 5 kann eine Steckerverbindung zum Anschluss von Anschlussdrähten des Akkumulators 6 sein. Alternativ kann der Akkumulator eine eigene Leiterplatte aufweisen und mit einer Platinenstecker-Verbindung an die LED-Einheit angeschlossen sein.

Die drei Hauptkomponenten - Steuerungseinheit 1, LED-Einheit 3 und Akkumulator 6 - sind allesamt länglich (also in einer Dimension deutlich länger als in den zwei anderen Dimensionen) ausgebildet, wobei die elektronische Steuerungseinheit 1 und der Akkumulator 6 jeweils senkrecht zu der LED-Einheit 3 angeordnet sind. Die jeweiligen Anschlüsse 2, 5 sind an - der Länge nach - verschiedenen Ende der LED-Einheit 3 angebracht, so dass die Distanz zwischen der elektronischen Steuerungseinheit 1 und dem dazu parallelen Akkumulator 6 im Wesentlichen der Länge der LED-Einheit 3 entspricht.

Die drei Hauptkomponenten sind an jeweils einer anderen Seite der Leuchtplatte 9 angeordnet. Gemäss der Orientierung der **Figur 3** ist
- die elektronische Steuerungseinheit 1 an der oberen Seite der Leuchtplatte 9 angeordnet;
- die LED-Einheit 3 an der linken Seite der Leuchtplatte 9 angeordnet; und
- der Akkumulator 6 an der unteren Seite der Leuchtplatte 9 angeordnet.
Die gezeigte Kombination 102 kann in einem sehr dünnen Rahmen 30 untergebracht werden, so dass die Sicherheitsbeleuchtung 101 - von der Flachseite der Sicherheitsbeleuchtung 101 aus gesehen - nur unwesentlich grösser als die Leuchtplatte 9 sein kann.

**Figur 4** zeigt eine als zweiseitiger Seiten-Strahler ausgebildete Kombination 102 aus einer elektronischen Schaltung 100 und zwei Leuchtplatten 9 im Querschnitt. Die beiden Leuchtplatten 9 sind - entlang ihrer Flachseiten - zueinander parallel angeordnet und die elektronische Schaltung 100 ist zwischen den beiden Leuchtplatten 9 angeordnet. Die Leuchtplatten 9 bestehen jeweils aus zwei Unter-Platten 14, 15. Eine erste Unter-Platte 14 ist jeweils als lichtführende (Unter-)Platte ausgebildet; eine zweite Unter-Platte 15 ist jeweils als Licht-Diffusor-(Unter-)Platte ausgebildet. Die LEDs 4 sind auf der LED-Einheit 3 in zwei, zueinander parallelen, Reihen angeordnet. Eine erste Reihe von LEDs 4 ist so angeordnet, dass sie primär in die lichtführende (Unter-)Platte 14 einer erste Leuchtplatte 9 einstrahlt; eine zweite Reihe von LEDs 4 ist so angeordnet, dass sie primär in die lichtführende (Unter-)Platte 14 einer zweiten Leuchtplatte 9 einstrahlt. Das Licht verteilt sich in der jeweiligen lichtführenden (Unter-)Platte 14 und wird durch die jeweilig zugehörigen Licht-Diffusor-(Unter-)Platte 15 abgestrahlt. Auf den Aussenseiten der jeweiligen Leuchtplatten 9 kann ein als Sicherheitskennzeichen ausgebildetes Piktogramm 12 angebracht sein, welches zum Beispiel auf einen möglichen Fluchtweg hinweist.

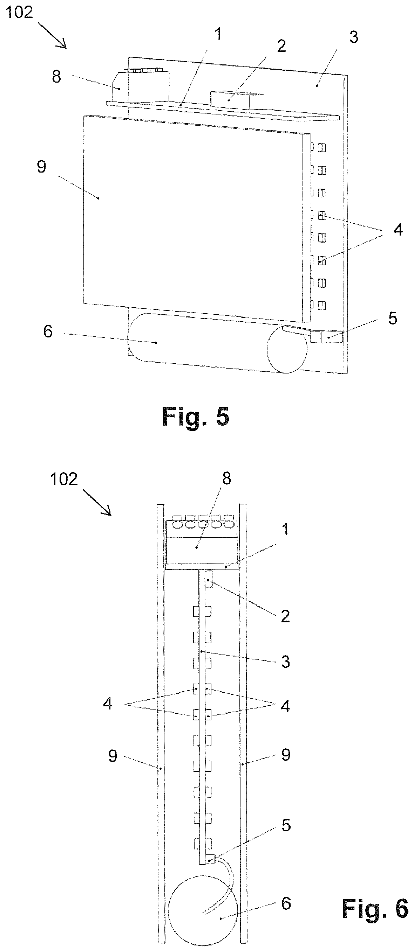

**Figur 5** zeigt eine Kombination 102 aus einer elektronischen Schaltung 100 und einer Leuchtplatte 9 ähnlich der Kombination aus Figur 3, wobei jedoch die LED-Einheit 3 an einer Flachseite angebracht sind und die LEDs 4 - von dem Piktogramm 12 aus gesehen - von hinten in eine Flachseite der Leuchtplatte 9 einstrahlen. Eine solche Ausführungsform wird "Hinter-Strahler" genannt.

Die als Leiterplatte ausgebildete LED-Einheit 3 ist im Gegensatz zu Figur 3 flächig (also in einer Dimension deutlich kürzer als in den zwei anderen Dimensionen) ausgebildet. Insbesondere sind auf einer Flachseite der Leiterplatte LEDs 4 in mehreren parallelen Reihen matrixartig aufgelötet.

Auch in diesem Beispiel sind der Anschluss 2 für die elektronische Steuerungseinheit 1 und der Anschluss 5 für den Akkumulator 6 an verschiedenen Ende der LED-Einheit 3 angebracht, so dass die Distanz zwischen der elektronischen Steuerungseinheit 1 und dem dazu parallelen Akkumulator 6 im Wesentlichen der Länge der LED-Einheit 3 entspricht.

Wieder sind die drei Hauptkomponenten an jeweils einer anderen Seite der Leuchtplatte 9 angeordnet. Gemäss der Orientierung der **Figur 5** ist
- die elektronische Steuerungseinheit 1 an der oberen Seite der Leuchtplatte 9 angeordnet;
- die LED-Einheit 3 an einer Flachseite (von der Sicherheitsbeleuchtung 101 aus gesehenen: Innenseite) der Leuchtplatte 9 angeordnet; und
- der Akkumulator 6 an der unteren Seite der Leuchtplatte 9 angeordnet.
Deswegen kann auch die hier gezeigte Kombination 102 in einem sehr dünnen Rahmen 30 untergebracht werden, so dass die Sicherheitsbeleuchtung 101 von der Flachseite der Sicherheitsbeleuchtung 101 aus gesehen - nur unwesentlich grösser als die Leuchtplatte 9 sein kann.

**Figur 6** zeigt eine als zweiseitiger Hinter-Strahler ausgebildete Kombination 102 aus einer elektronischen Schaltung 100 und zwei Leuchtplatten 9 im Querschnitt. Die beiden Leuchtplatten 9 sind - entlang ihrer Flachseiten - zueinander parallel angeordnet und die elektronische Schaltung 100 ist zwischen den beiden Leuchtplatten 9 angeordnet. Die Leuchtplatten 9 können als Licht-Diffusor-(Unter-)Platten ausgebildet sein. Die LED-Einheit 3 ist als Leiterplatte ausgebildet, auf deren beiden Flachseiten LEDs 4 in einem Matrix-Schema angeordnet sind. Auf den - von der Sicherheitsbeleuchtung 101 aus gesehenen - Aussenseiten der jeweiligen Leuchtplatten 9 kann ein als Sicherheitskennzeichen ausgebildetes Piktogramm 12 angebracht sein.

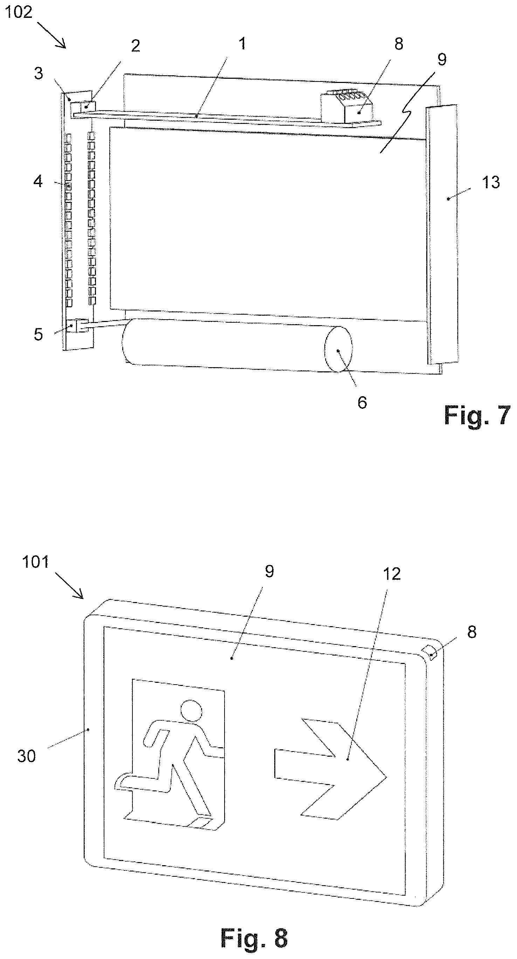

**Figur 7** zeigt die als Seiten-Strahler ausgebildete Kombination 102 aus einer elektronischen Schaltung 100 und zwei Leuchtplatten 9 aus Figur 1, welche zusätzlich an einer, der Seite mit der LED-Einheit 3 gegenüberliegenden, Seite einen Licht-Reflektor 13 aufweist. Der Licht-Reflektor 13 reflektiert an dieser Seite austretendes Licht in die Leuchtplatte 9 zurück, wodurch die Effektivität der Beleuchtung erhöht wird. Alternativ oder zusätzlich können Licht-Reflektoren 13 auch an anderen Seiten der Leuchtplatte 9 angebracht werde. Beispielsweise können die der Leuchtplatte 9 zugewandten Seiten aller Komponenten Licht-Reflektoren 13 aufweisen.

**Figur 8** zeigt eine Sicherheitsbeleuchtung 101 mit Rahmen 30 und mit einem als Sicherheitskennzeichen ausgebildeten Piktogramm 12. Das Sicherheitskennzeichen kann je nach gültiger Vorschrift ausgebildet sein und zum Beispiel in Grün und Weiss gehalten sein. Die Leuchtplatte 9 ist von einem sehr dünnen Rahmen 30 umrandet, in den die Komponenten der elektronischen Schaltung 100 integriert sind. Die gezeigte Sicherheitsbeleuchtung 101 ist zur Montage an eine Wand an einer Seite des Rahmens 30 vorgesehen, d.h. dass der Anschluss 8 oder Netzanschluss 10 an dieser Seite des Rahmens angeordnet ist.

## Patentansprüche

1. **Elektronische Schaltung (100)**
- für eine Sicherheitsbeleuchtung (101) mit Notstromversorgung und mit einem Piktogramm (12),
wobei die elektronische Schaltung (100)
- eine elektronische Steuerungseinheit (1),
- eine LED-Einheit (3) mit Leuchtdioden (4) (LEDs), und
- einen Akkumulator (6) zur Speicherung von elektrischer Energie, aufweist,
- wobei die elektronische Steuerungseinheit (1) zur Steuerung einer Sicherheitsbeleuchtung (101) eingerichtet ist,
- wobei die elektronische Steuerungseinheit (1) zur Speisung durch einen Netzanschluss (10) eingerichtet ist,
- wobei die elektronische Steuerungseinheit (1) dazu eingerichtet ist in einem Notbetrieb die LEDs (4) mit Energie aus dem Akkumulator (6) zu versorgen, und
- wobei die elektronische Schaltung (100) dazu eingerichtet ist, sowohl einen Akkumulator-Ladestrom als auch einen Akkumulator-Entladungsstrom durch die LED-Einheit (3) zu führen.

2. Elektronische Schaltung (100) gemäss Anspruch 1,
- wobei Leitungen (11) zur Führung des Akkumulator-Ladestroms und des Akkumulator-Entladungsstroms den Akkumulator mit der elektronischen Steuerungseinheit (1) elektrisch verbinden und zumindest teilweise, insbesondere grösstenteils, über die LED-Einheit (3) verlaufen.

3. Elektronische Schaltung (100) gemäss einem der vorstehenden Ansprüche, wobei die LED-Einheit (3) einen ersten Anschluss (2) und einen zweiten Anschluss (5) aufweist,
- wobei der erste Anschluss (2) mindestens vierpolig ist,
- wobei der zweite Anschluss (5) mindestens zweipolig ist, und
- wobei der erste Anschluss (2) und der zweite Anschluss (5) räumlich voneinander getrennt sind,
∘ insbesondere wobei der erste Anschluss (2) an einem ersten Ende der LED-Einheit (3) angebracht ist und der zweite Anschluss (5) an einem, dem ersten Ende gegenüber gelegenen, zweiten Ende der LED-Einheit (3) angebracht ist,
▪ insbesondere wobei die räumliche Distanz zwischen dem ersten Anschluss (2) und dem zweiten Anschluss (5) mindestens halb so gross, insbesondere im Wesentlichen so gross, ist wie die längste Kante eines kleinsten die LED-Einheit (3) umschreibenden Quaders.

4. Elektronische Schaltung (100) gemäss einem der vorstehenden Ansprüche,
- wobei der Abstand zwischen der elektronischen Schaltung (1) und dem Akkumulator (6) mindestens halb so gross, insbesondere im Wesentlichen so gross, ist wie die längste Kante eines kleinsten die LED-Einheit (3) umschreibenden Quaders.

5. Elektronische Schaltung (100) gemäss einem der vorstehenden Ansprüche, wobei ein kleinster die LED-Einheit (3) umschreibende Quader eine erste Kantenlänge, eine zweite Kantenlänge und eine dritte Kantenlänge hat und
- wobei die erste Kantenlänge mindestens fünfmal so lang ist wie die zweite Kantenlänge und
- wobei die erste Kantenlänge mindestens fünfmal so lang ist wie die dritte Kantenlänge.

6. Elektronische Schaltung (100) gemäss einem der vorstehenden Ansprüche,
- wobei die LEDs (4) auf der LED-Einheit (3) in einer oder mehrerer Reihen angeordnet sind,
∘ insbesondere wobei die LEDs (4) auf der LED-Einheit (3) in einer Matrix angeordnet sind.

7. Elektronische Schaltung (100) gemäss einem der vorstehenden Ansprüche, wobei LEDs (4) auf zwei sich gegenüberliegenden Flachseiten der LED-Einheit (3) angeordnet sind.

8. **Kombination** (102) aus einer elektronischen Schaltung (100) gemäss einem der vorstehenden Ansprüche und einer Leuchtplatte (9) mit einem Piktogramm (12),
- wobei die Leuchtplatte (9) zumindest teilweise transparent ist,
∘ insbesondere wobei die Leuchtplatte (9) - zumindest teilweise - als eine lichtführende Platte und/oder als eine Licht-Diffusor-Platte ausgebildet ist.

9. Kombination (102) gemäss Anspruch 8, aufweisend einen Licht-Reflektor (13),
- insbesondere wobei der Licht-Reflektor (13) ein von der Leuchtplatte (9) separates Bauteil ist.

10. Kombination (102) gemäss einem der Ansprüche 8 bis 9,
- wobei die elektronische Steuerungseinheit (1) an einer ersten Seite der Leuchtplatte (9) angeordnet ist,
- wobei die LED-Einheit (3) an einer zweiten Seite der Leuchtplatte (9), welche an die erste Seite anschliesst, angeordnet ist, und
- wobei der Akkumulator (6) an einer dritten Seite der Leuchtplatte (9), welche der ersten Seite gegenüber liegt, angeordnet ist.

11. Kombination (102) gemäss Anspruch 10,
- wobei die zweite Seite eine Flachseite der Leuchtplatte (9) ist, oder
- wobei die zweite Seite eine Kurz-Seite der Leuchtplatte (9) ist.

12. Kombination (102) gemäss einem der Ansprüche 8 bis 11,
- wobei die Kombination (102) eine weitere Leuchtplatte mit einem Piktogramm (12) aufweist, und
- wobei die weitere Leuchtplatte (9)zumindest teilweise transparent ist,
∘ insbesondere wobei die Leuchtplatte (9) und die weitere Leuchtplatte (9) an sich gegenüberliegenden Flachseiten der LED-Einheit (3) angeordnet sind.

13. Kombination (102) gemäss einem der Ansprüche 8 bis 10, wobei ein Licht-Reflektor (13) an einer Seite der Leuchtplatte (9) angeordnet ist, welche einer Seite der Leuchtplatte (9) gegenüberliegt an welcher die LED-Einheit (3) angeordnet ist.

14. Kombination (102) gemäss einem der Ansprüche 10 bis 13,
- wobei die elektronische Steuerungseinheit (1) länglich ausgebildet ist und parallel zu der ersten Seite der Leuchtplatte (9) angeordnet ist, und/oder
- wobei die LED-Einheit (3) länglich ausgebildet ist und parallel zu der zweiten Seite der Leuchtplatte (9) angeordnet ist, und/oder
- wobei der Akkumulator (6) länglich ausgebildet ist und parallel zu der dritten Seite der Leuchtplatte (9) angeordnet ist, und/oder
- wobei die Kombination (102) optional einen Licht-Reflektor (13) aufweist, der länglich ausgebildet ist und parallel zu einer der drei Seiten oder zu einer anderen, vierten, Seite der Leuchtplatte (9) angeordnet ist.

15. **Sicherheitsbeleuchtung** (101) mit Notstromversorgung und mit einem Piktogramm (12), aufweisend die Kombination (102) gemäss einem der Ansprüche 9 bis 14,
aufweisend einen Rahmen (30),
- wobei die Leuchtplatte (9) in dem Rahmen (30) eingefasst ist, und
- wobei die elektronische Steuerungseinheit (1), die LED-Einheit (3) und der Akkumulator (6) in dem Rahmen (30) angeordnet sind,
o insbesondere wobei der Rahmen (30) mindestens drei, zueinander im Wesentlichen senkrechte Abschnitte aufweist und
▪ die elektronische Steuerungseinheit (1),
▪ die LED-Einheit (3) und
▪ der Akkumulator (6)
in jeweils verschiedenen Abschnitten des Rahmens (30) angeordnet sind.
